Europäisches Patentamt

European Patent Office

Office européen des brevets

(19)

(11) **EP 0 580 827 B1**

(12) **EUROPÄISCHE PATENTSCHRIFT**

(45) Veröffentlichungstag und Bekanntmachung des Hinweises auf die Patenterteilung:
**15.05.1996 Patentblatt 1996/20**

(21) Anmeldenummer: **93901640.8**

(22) Anmeldetag: **15.01.1993**

(51) Int Cl.6: **F16H 61/04**, B60K 41/10, F16H 3/00

(86) Internationale Anmeldenummer:
**PCT/DE93/00027**

(87) Internationale Veröffentlichungsnummer:
**WO 93/16303 (19.08.1993 Gazette 1993/20)**

(54) **EINRICHTUNG ZUR STEUERUNG DES ABTRIEBSMOMENTS EINES AUTOMATISCHEN SCHALTGETRIEBES**

DEVICE FOR CONTROLLING THE OUTPUT TORQUE OF AN AUTOMATIC GEARBOX

DISPOSITIF DE REGLAGE DU COUPLE DE SORTIE D'UNE BOITE DE VITESSES AUTOMATIQUE

(84) Benannte Vertragsstaaten:
**DE GB SE**

(30) Priorität: **14.02.1992 DE 4204401**

(43) Veröffentlichungstag der Anmeldung:
**02.02.1994 Patentblatt 1994/05**

(73) Patentinhaber: **ROBERT BOSCH GMBH 70442 Stuttgart (DE)**

(72) Erfinder:
• **BULLMER, Wolfgang D-7120 Bietigheim-Bissingen (DE)**
• **STREIB, Martin D-7143 Vaihingen/Enz 6 (DE)**
• **SCHOETTLE, Richard D-7130 Muehlacker (DE)**
• **ZHANG, Hong D-7120 Bietigheim-Bissingen (DE)**

(56) Entgegenhaltungen:
EP-A- 0 411 558    DE-A- 2 938 268
DE-A- 3 140 259    US-A- 4 724 723
US-A- 5 046 176

## Beschreibung

### STAND DER TECHNIK

Die Erfindung betrifft eine Einrichtung zur Steuerung des Abtriebsmoments eines automatischen Schaltgetriebes in einem motorgetriebenen Fahrzeug auf einen vom Fahrer vorgegebenen Wert, wobei das Schaltgetriebe wenigstens zwei über Kupplungen alternativ einlegbare Getriebegänge aufweist.

Bei konventionellen automatischen Schaltgetrieben erfolgt beispielsweise beim Hochschalten üblicherweise eine Absenkung des Antriebsmoments, was zu einem den Komfort beeinträchtigenden Ruck führt. Um diesen abzumildern, kann während des Schaltvorgangs das Motormoment in geeigneter Weise beeinflußt werden, z.B. durch Veränderung des Zündwinkels od.dgl., um den Verlauf des Abtriebsdrehmoments zu glätten, den Komfort zu verbessern und die Belastung des Getriebes zu reduzieren. Dennoch liegt vor und nach dem Schaltvorgang ein unterschiedliches Abtriebsdrehmoment vor. Die verwendeten Begriffe "Abtriebsmoment" und "Abtriebsdrehmoment" beinhalten das Getriebeausgangsmoment.

In der deutschen Patentanmeldung DE-A-40 37 237 (siehe hierzu die korrespondierende WO-A-92/09448; beide nicht vor dem Prioritätstag der vorliegenden Anmeldung veröffentlicht) und der EP-A-0 525 419 (nicht vor dem Anmeldetag der vorliegenden Anmeldung veröffentlicht) wurde bereits vorgeschlagen, das Abtriebsmoment durch gezielte Motormomentsteuerung vor und nach dem Schaltvorgang auf gleicher Höhe zu halten, sofern sich der Fahrerwunsch während der Schaltung nicht ändert. Das Abtriebsmoment (Drehmoment am Getriebeausgang) und damit die Zugkraft an den Antriebsrädern wird so gesteuert, daß es in weiten Grenzen unabhängig vom gerade eingelegten Gang oder dem Zustand der Wandlerüberbrückungskupplung ist. Dieses Verfahren ist in der Fachwelt unter dem Namen "Mastershift" bekannt. Mit Hilfe dieser bekannten Steuerfunktion können die Schaltpunkte des Getriebes in verbrauchsoptimale Bereiche gelegt werden, ohne daß dabei Einbußen bezüglich Sportlichkeit und Zugkraftdosierbarkeit in Kauf genommen werden müssen. Die bekannte Steuerfunktion bezieht sich jedoch lediglich auf die Steuerung des Abtriebsmoments außerhalb der Schaltvorgänge. Ein üblicher Motormomentverlauf während des Schaltvorgangs führt zu einem Abtriebsmoment-Einbruch während dieses Schaltvorgangs, der im Hinblick auf den Schaltkomfort nach Möglichkeit vermieden werden sollte.

Aus der US 4,724,723 ist ein System zum Betrieb eines automatischen Schaltgetriebes bekannt, bei dem der Fahrer des Fahrzeugs eine gewünschte Soll-Fahrleistung vorgibt, die mit einem entsprechenden aus der gemessen Getriebeabtriebsdrehzahl und den gemessenen Getriebeabtriebsmoment berechneten Istwert verglichen wird. Während des Ablaufs eines Hochschaltvorgangs wird das unter Berücksichtigung der Getriebeabtriebsdrehzahl ermittelte Abtriebsmoment konstant gehalten. Hierzu findet eine Regelung des Betätigungsdrucks der den höheren, einzulegenden Getriebegang zugeordneten Kupplung abhängig von den gemessenen Getriebeabtriebsmoment statt. Gleichzeitig wird die dem niedrigeren Getriebegang zugeordnete Kupplung geöffnet und das Motormoment erhöht. Nach dem Öffnen der dem niedrigeren Getriebegang zugeordneten Kupplung wird das Motormoment reduziert. Mit der anschließenden Erhöhung des Kupplungsschließdrucks der dem höheren Getriebegang zuzuordnenden Kupplung wird der Schaltvorgang beendet.

Aufgabe der vorliegenden Erfindung ist eine Optimierung eines Systems zur Konstanthaltung des Abtriebsmoments während Schaltvorgängen, insbesondere bezüglich des Schaltkomforts.

### VORTEILE DER ERFINDUNG

Die erfindungsgemäße Einrichtung mit den in den unabhängigen Ansprüchen 1 und 2 genannten Merkmalen für das Hochschalten und das Rückschalten hat demgegenüber den Vorteil, daß auch während des Schaltvorgangs das Abtriebsmoment konstant bleibt, so daß Schaltvorgänge mit optimalem Komfort ohne jeglichen Ruck erreicht werden können. Die Realisierung ist bei üblichen automatischen Schaltgetrieben ohne mechanische Veränderungen möglich, sofern der Druck in den zu- und abschaltenden Kupplungen elektronisch regelbar oder steuerbar ist, wobei lediglich elektronische Steuerfunktionen hinzukommen, die nur zu geringen Mehrkosten führen.

Durch die in den Unteransprüchen aufgeführten Maßnahmen sind vorteilhafte Weiterbildungen und Verbesserungen der in den beiden unabhängigen Ansprüchen 1 und 2 angegebenen Maßnahmen möglich.

Die Mittel zur Reduzierung des Kupplungsschließdrucks beim Rückschalten weisen zweckmäßigerweise eine durch kurzzeitige zusätzliche Reduzierung des Schließdrucks den Übergang in die Gleitreibung der zweiten Kupplung bewirkende Steuermittel auf. Da der Übergang von Haft- in Gleitreibung üblicherweise mit einer Hysterese verbunden ist, wird vorzugsweise durch Überlagerung des Schließdrucks mit einem negativen Wert dieser Übergang geschaffen.

Um aus dem vorgegebenen Sollwert für das Abtriebsmoment in Abhängigkeit des jeweiligen Getriebegangs den Sollwert für das Übertragungsmoment und den Kupplungsschließdruck der zugeordneten Kupplung zu berechnen, sind in vorteilhafter Weise erste Rechenmittel vorgesehen. Die Mittel zum zeitgesteuerten kontinuierlichen Öffnen und Schließen der Kupplung weisen hierzu zweckmäßigerweise eine Rampensteuerung für den Sollwert des Übertragungsmoments auf. Aus diesem Sollwert für das Übertragungsmoment der Kupplungen wird ein dafür erforderlicher Sollwert für den Kupplungsdruck errechnet. Durch diese Rampensteuerung wird also gleichzeitig das kontinuierliche Öffnen bzw. Schließen der Kupplung gesteuert, wie auch ein Sollwert für das Übertragungsmoment errechnet, der zur entsprechenden aufeinander abgestimmten Rampensteuerung des Motormoments dienen kann.

Um den unvermeidbaren Totzeiten und Reaktionszeiten im Getriebe Rechnung zu tragen, hat sich weiterhin eine Rechnerstufe in den ersten Rechenmitteln zur Bestimmung eines theoretischen Istwerts für das Übertragungsmoment der zugehörigen Kupplung aus dem Sollwert unter Berücksichtigung eines Druckreglermodells für den zugeordneten Druckregler als günstig erwiesen. Hierdurch kann das zugeordnete Motormoment noch exakter reguliert werden.

Vergleichsmittel zum Vergleich eines berechneten Endwerts für das Übertragungsmoment der jeweiligen rutschenden Kupplung mit dem augenblicklichen Wert dieses Übertragungsmoments dienen beim Hochschaltvorgang bei Erreichen der Gleichheit zur Öffnung der anderen beteiligten Kupplung und zur Einleitung einer Motorbeeinflussung, um die rutschende Kupplung auf ihre Synchrondrehzahl zu bringen.

Bei Erreichen der jeweiligen Synchrondrehzahl der rutschenden Kupplung sind zweckmäßigerweise Mittel zur Druckerhöhung des Kupplungsdrucks vorgesehen, die diesen Kupplungsdruck auf einen das Rutschen verhindernden Wert erhöhen.

Um die errechneten Sollwerte in Istwerte im Motor und im Getriebe umzusetzen, ist zweckmäßigerweise eine mit dem Sollwert für das Motormoment beaufschlagbare elektronische Steuervorrichtung zur Einstellung des Ist-Motormoments mit dem Motor verbunden. Weiterhin sind die Kupplungen für die einzelnen Getriebegänge mit Druckreglern oder geeignet gesteuerten Ventilen verbunden, die vom jeweiligen Sollwert für den Kupplungsschließdruck beaufschlagt sind.

ZEICHNUNG

Ein Ausführungsbeispiel der Erfindung ist in der Zeichnung dargestellt und in der nachfolgenden Beschreibung näher erläutert. Es zeigen:

Fig. 1    eine schematische Darstellung eines automatischen Stufengetriebes mit zwei Getriebegängen, das von einer elektronischen Steuervorrichtung beaufschlagt ist, als Ausführungsbeispiel der Erfindung,

Fig. 2    eine Funktionsablaufdarstellung der Vorgänge beim Hochschaltvorgang,

Fig. 3    eine Funktionsablaufdarstellung der letzten Phase des Hochschaltvorgangs in detaillierterer Ausführung,

Fig. 4    ein Signalablaufdiagramm zur Erläuterung der Vorgänge beim Hochschaltvorgang und

Fig. 5    ein Signalablaufdiagramm zur Erläuterung der Vorgänge beim Rückschaltvorgang.

BESCHREIBUNG DES AUSFÜHRUNGSBEISPIELS

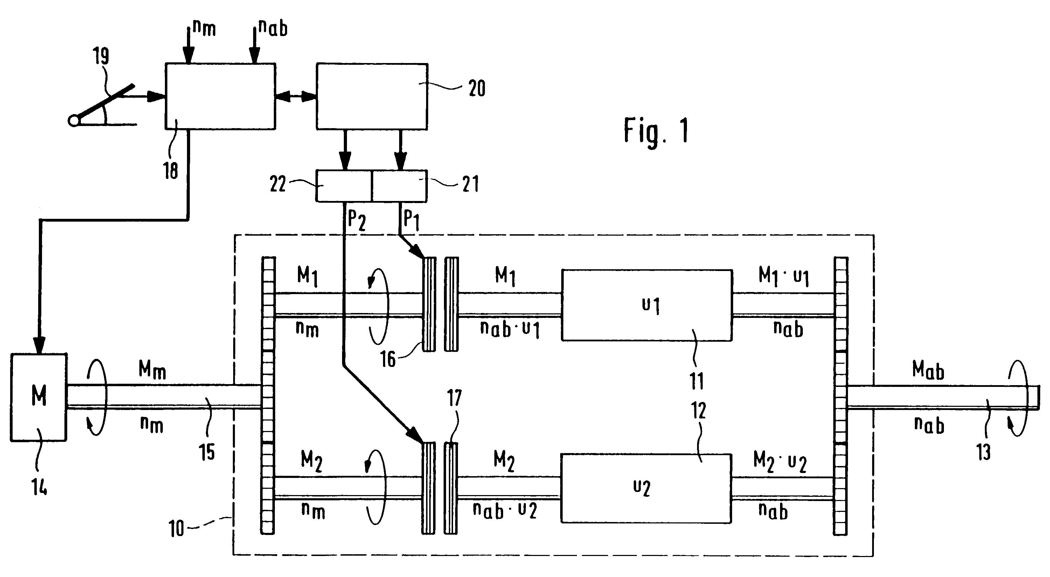

Bei dem in Fig. 1 dargestellten Ausführungsbeispiel ist ein automatisches Stufengetriebe 10 schematisch dargestellt. Es weist zwei Getriebegänge bzw. Schaltstufen auf, die im folgenden als erster Gang 11 und zweiter Gang 12 bezeichnet werden. Das Übersetzungsverhältnis des ersten Gangs 11 ist $u_1$ und das Übersetzungsverhältnis des zweiten Gangs 12 ist $u_2$. Die zur Erzielung derartiger Übersetzungsverhältnisse erforderlichen Zahnräder und ihr Ineinandergreifen sind zur Vereinfachung als rechteckige Blöcke dargestellt. Die beiden Gänge 11 und 12 sind zu einer gemeinsamen Abtriebswelle 13 zusammengeführt, über die die Räder des Fahrzeugs gegebenenfalls über Differentiale in nicht dargestellter Weise angetrieben werden. Das Abtriebsmoment beträgt $M_{ab}$ und die Abtriebsdrehzahl $n_{ab}$. Angetrieben wird das Stufengetriebe 10 von einem Motor 14 über eine Antriebswelle 15. Der Motor 14 überträgt dabei das Motormoment $M_m$ und die Motordrehzahl $n_m$ auf das Stufengetriebe 10. Bei diesem Motor handelt es sich im allgemeinen um eine Brennkraftmaschine, wie einen Ottomotor oder einen Dieselmotor, es kann sich prinzipiell jedoch auch um einen Elektromotor handeln. Die Antriebswelle 15 ist über zwei Kupplungen 16,17 mit den beiden Gängen 11,12 verbunden. Zur besseren Übersichtlichkeit ist in diesem Ausführungsbeispiel lediglich ein 2-Wellen-Getriebe dargestellt, jedoch ist selbstverständlich auch eine Realisierung mit einer größeren Wellenzahl oder als Planetengetriebe möglich.

Die folgende Beschreibung gilt für einen Schaltvorgang bei geschlossener Wandlerkupplung des automatischen Stufengetriebes 10, die bei praktisch jedem automatischen Getriebe vorhanden ist, jedoch zur Vereinfachung nicht dargestellt ist. Findet die Schaltung bei offener Wandlerkupplung statt, so tritt anstelle des Motormoments das Turbinenmoment und anstelle der Motordrehzahl die Turbinendrehzahl. Wenn im folgenden also die Begriffe "Motormoment" und "Motordrehzahl" verwendet werden, so soll darunter auch das Turbinenmoment bzw. die Turbinendrehzahl bei offener Wandlerkupplung verstanden werden.

Zur Steuerung des Motors 14 ist eine elektronische Motorsteuervorrichtung 18 vorgesehen, durch die in an sich bekannter Weise der Motor 14 durch Steuerung oder Regelung der Zündung und/oder der Luft-und/oder Kraftstoffzumessung gesteuert wird. Dies kann anhand vorgegebener Funktionen oder Kennfelder erfolgen. Der Fahrerwunsch im Hinblick auf das Abtriebsmoment, die Motorleistung oder die Geschwindigkeit des Fahrzeugs werden über ein Fahrpedal 19 vorgegeben. Weiterhin werden der Motorsteuervorrichtung 18 wenigstens die Motordrehzahl $n_m$ vorgegeben. Die Beeinflussung über weitere Parameter ist hier zur Vereinfachung nicht dargestellt.

Eine elektronische Getriebesteuervorrichtung 20 ist mit der Motorsteuervorrichtung 18 verbunden und steuert ihrerseits zwei Druckregler 21,22 zur Erzeugung des Kupplungsdrucks $p_1$ und $p_2$ für die beiden Kupplungen 16,17. Die jeweils geschlossene Kupplung gibt den Getriebegang vor, und ein Schaltvorgang wird prinzipiell durch Lösen dieser Kupplung und Schließen einer anderen Kupplung für einen anderen Gang durchgeführt. Dies wird im folgenden noch näher beschrieben.

Zur Vereinfachung sind lediglich zwei Gänge 11,12 dargestellt, jedoch kann das automatische Stufengetriebe 10 selbstverständlich auch eine größere Anzahl von Gängen aufweisen. Zur Erläuterung des Schaltvorgangs ist jedoch die Darstellung von zwei Gängen ausreichend.

Die Motorsteuervorrichtung 18 und die Getriebesteuervorrichtung 20 sind gewöhnlich als Computersteuerungen mit in Kennfeldern abgelegten Steuerdaten ausgebildet. Sie können separat oder als einziger Rechner ausgebildet sein.

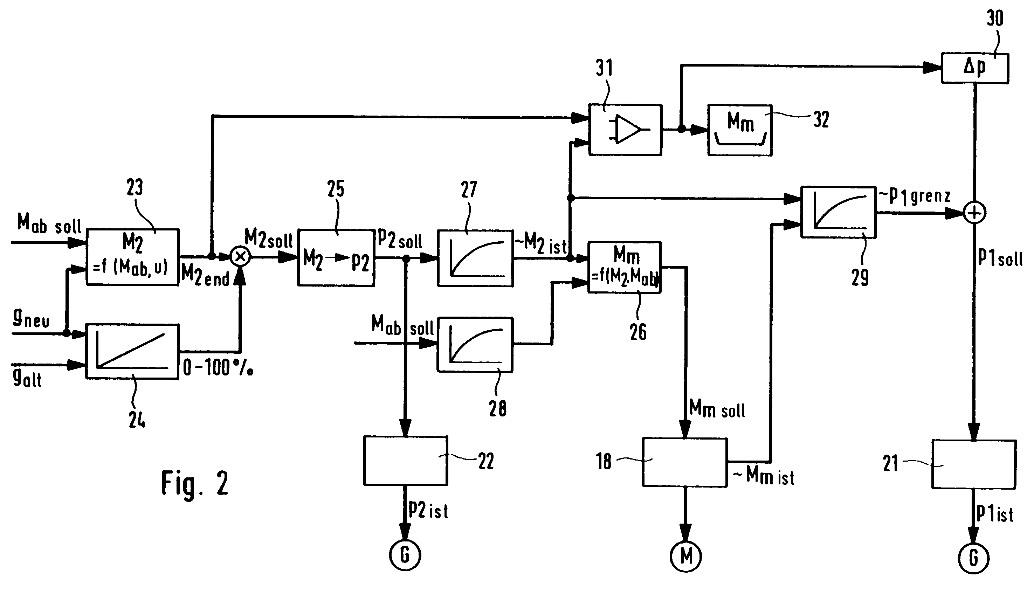

Ein Hochschaltvorgang wird nun im folgenden anhand der Fig. 2 bis 4 erläutert, wobei der Ausgangspunkt der eingelegte erste Gang 11 ist, das heißt, die Kupplung 16 ist geschlossen und die Kupplung 17 offen. Das volle Drehmoment wird somit über die ohne Schlupf arbeitende Kupplung 16 übertragen. Bei der Hochschaltung muß in einer ersten Phase die Kupplung 17 das Moment der Kupplung 16 übernehmen. Dazu wird in der Kupplung 17 ein Druck aufgebaut, bis sie das volle Motormoment überträgt und damit die Kupplung 16 entlastet, die dann gelöst werden kann. Die zu dieser Zeit mit Schlupf arbeitende Kupplung 17 wird nun in einer zweiten Phase durch Reduzierung der Motordrehzahl $n_m$ auf ihre Synchrondrehzahl gebracht und dann schlupffrei geschlossen. Während der gesamten Vorgänge wird das Abtriebsmoment $M_{ab}$ konstant gehalten. Hierzu wird das Motormoment $M_m$ entsprechend gesteuert. Diese im groben geschilderten Vorgänge werden nun im folgenden im Detail erläutert.

Zum Zeitpunkt $t_1$ erfolgt durch das Schaltprogramm ein Schaltbefehl, der beispielsweise durch Überschreiten einer Abtriebsdrehzahlschwelle oder auch durch eine Handbetätigung des Fahrers ausgelöst werden könnte. Durch den Schaltbefehl soll eine Umschaltung vom bisherigen ersten Gang ($g_{alt}$) in den zweiten Gang ($g_{neu}$) ausgelöst werden. In einem Rechenablauf 23 wird hierzu aus dem Sollwert des Abtriebsmoments $M_{ab\ soll,\ t_1}$ und dem Übersetzungsverhältnis $u_2$ des neuen Gangs der Soll-Endwert $M_{2\ end}$ für das Übertragungsmoment der Kupplung 17 für den zweiten Gang nach der folgenden Gleichung bestimmt werden:

$$M_{2\ end} = (1/u_2) \cdot M_{ab\ soll,\ t_1} \qquad (1)$$

Diesem erforderlichen Endwert für das Übertragungsmoment wird nun eine Rampenfunktion $f(t)$ über den Rampenablauf 24 multiplikativ überlagert, wobei $f(t)$ beim Wert 0 beginnt und stetig bis zum Wert 1 ansteigt. Hieraus ergibt sich ein zeitabhängiger Vorgabesollwert für das Übertragungsmoment der Kupplung 17 gemäß der folgenden Gleichung:

$$M_2(t) = f(t) \cdot (1/u_2) \cdot M_{ab\ soll,\ t_1} \qquad (2)$$

Im einfachsten Fall ist das Übertragungsmoment proportional zum Druck $p_2$, für eine genauere Berechnung können jedoch weitere Parameter wie Öltemperatur, Schleifzeit der Kupplung usw. berücksichtigt werden. Aus dem als bekannt vorausgesetzten Zusammenhang erhält man aus der Gleichung (2) daher den zeitlichen Verlauf des Drucks $p_2$ im Rechenablauf 25:

$$p_2(t) = p_2(M_2(t)) \qquad (3)$$

Dieser errechnete, zeitlich sich verändernde Sollwert für den Druck der Kupplung 17 wird nun dem zugeordneten Druckregler 22 zugeführt, der in Abhängigkeit dieser Funktion den Druck in der Kupplung 17 langsam aufbaut, so daß das Übertragungsmoment $M_2$ entsprechend der Rampenfunktion ansteigt.

Das Abtriebsmoment $M_{ab}$ setzt sich aus den Momenten $M_1$ und $M_2$ sowie den entsprechenden Übersetzungsstufen gemäß der folgenden Gleichung zusammen:

$$M_{ab} = M_1 \cdot u_1 + M_2 \cdot u_2 \qquad (4)$$

Außerdem entspricht das Motormoment $M_m$ der Summe der Momente $M_1$ und $M_2$. $M_{ab\ soll}$ ist durch den Fahrerwunsch vorgegeben, das heißt, $M_{ab\ soll}$ hängt unter anderem von der Pedalstellung des Fahrpedals 19 ab. Hierdurch ergibt sich für das erforderliche Motormoment die folgende Beziehung:

$$M_m = (1/u_1) \cdot M_{ab\ soll} + (1 - u_2/u_1)) \cdot M_2 \qquad (5)$$

Die Berechnung dieses erforderlichen Motormoments $M_m$ erfolgt im Rechenablauf 26, wobei zunächst $p_{2\ soll}$ im Rechenablauf 27 anhand eines Druckreglermodells und eines inversen Kupplungsmodells in das zu erwartende Übertragungsmoment $M_{2\ ist}$ umgerechnet wird. Hierbei werden Totzeiten und Verzögerungszeiten infolge der Druckabläufe in der Kupplung berücksichtigt, z.B. anhand von Funktionen oder Kennfeldern. Eine entsprechende Korrektur im Hinblick auf die tatsächlichen realen Vorgänge des Abtriebsmoments $M_{ab\ soll}$ erfolgt im Rechenablauf 28.

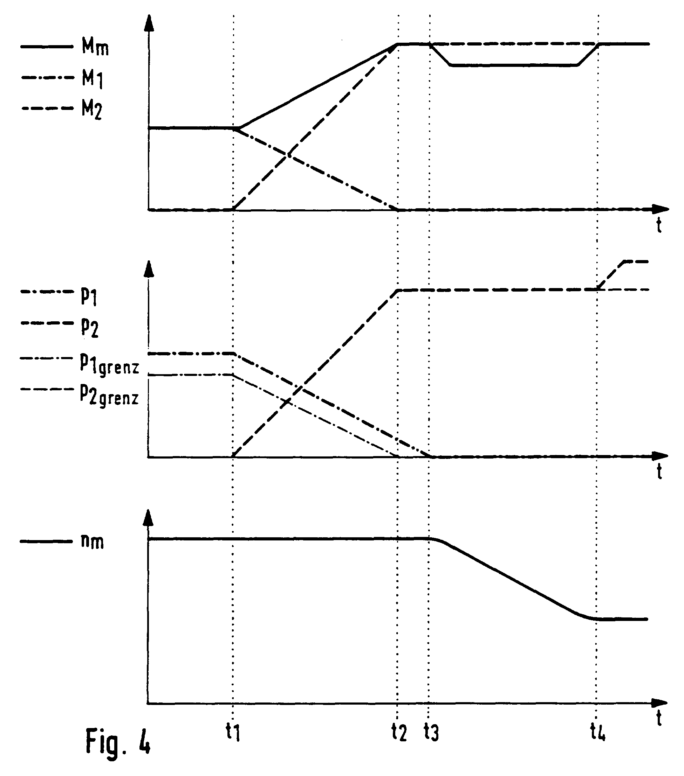

Der errechnete Sollwert für das Motormoment $M_{m\ soll}$ wird nun der Motorsteuervorrichtung 18 vorgegeben, die das Motormoment ebenfalls nach einer Rampe gemäß Fig. 4 erhöht. Während dieser Motormomenterhöhung arbeitet die Kupplung 16 ohne Schlupf und die Kupplung 17 mit Schlupf. Das Übertragungsmoment der Kupplung 16 nimmt hierbei laufend ab.

Im Rechenablauf 29 wird der erforderliche Grenzwert $p_{1\ grenz}$ für die Kupplung 1 berechnet, der für die Übertragung des sich verringernden Moments $M_1$ erforderlich ist. Um sicherzugehen, daß die Kupplung 17 ohne Schlupf arbeitet, wird noch ein Sicherheitswert $\Delta p$ im Additionsschritt 30 hinzugefügt. Der sich ergebende Sollwert für die Kupplung 16 $p_{1\ soll}$ wird dann dem Druckregler 21 zugeführt, der den Druck $p_1$ infolge des geringer werdenden Übertragungsmoments entsprechend absenken kann.

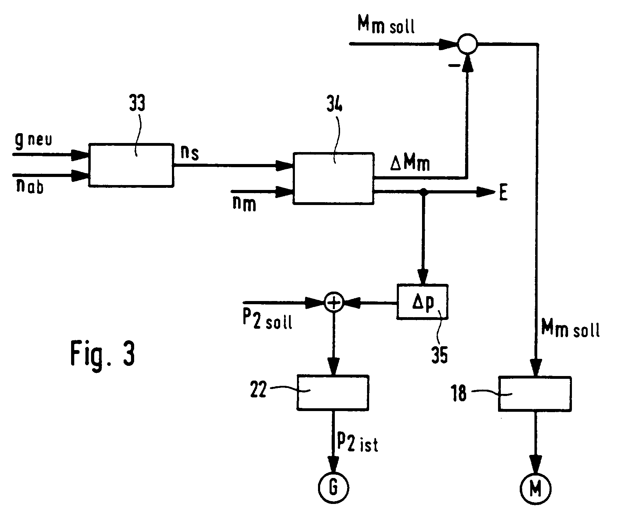

Zum Zeitpunkt $t_2$ erreicht das Übertragungsmoment $M_2$ der Kupplung 17 den vorgegebenen Endwert $M_{2\,end}$. Dies wird durch einen Vergleichsvorgang 31 erkannt. Zu diesem Zeitpunkt ist die Kupplung 16 entlastet und überträgt kein Moment mehr. Durch den Vergleichsvorgang 31 wird daher die Kupplung zu diesem Zeitpunkt durch Wegnahme des Drucks $p_1$ vollständig ruckfrei gelöst. Sobald die Kupplung 16 gelöst ist, beginnt ebenfalls durch den Vergleichsvorgang 31 ausgelöst die zweite Schaltphase 32, die in Fig. 3 detaillierter dargestellt ist.

Das gesamte Übertragungsmoment wird zu diesem Zeitpunkt durch die schleifende Kupplung 17 übertragen. Im Rechenablauf 33 wird in Abhängigkeit der Übersetzung $u_2$ und der Abtriebsdrehzahl $n_{ab}$ die Synchrondrehzahl der Kupplung 17 $n_s$ berechnet und im Vergleichsvorgang 34 mit der Motordrehzahl $n_m$ verglichen. Da hier infolge der schleifenden Kupplung ein Unterschied vorliegt, wird dem im Rechenablauf 26 errechneten Sollwert für das Motormoment ein negativer Wert $M_n$ überlagert, so daß sich der Sollwert um diesen Wert $M_n$ verringert. Diese Verringerung des Motormoments wirkt sich zum Zeitpunkt $t_3$ aus. Hierdurch kann der Schlupf in der Kupplung 17 durch Reduzierung der Motordrehzahl $n_m$ abgebaut werden. Sobald der Schlupf abgebaut ist, stimmt die Motordrehzahl $n_m$ mit der Synchrondrehzahl $n_s$ überein, und durch den Vergleichsvorgang 34 wird der Wert $M_n$ wieder auf den Wert 0 zurückgeführt, um keinen Momenteneinbruch am Abtrieb zu erhalten. Zu diesem Zeitpunkt kann der Schaltvorgang als beendet angesehen werden, und der Druck $p_2$ wird nun im Additionsschritt 35 wieder um einen Sicherheitszuschlag $\Delta p$ erhöht, der ein Durchrutschen der Kupplung 17 sicher verhindert. Gleichzeitig wird das Ende des Schaltvorgangs E signalisiert.

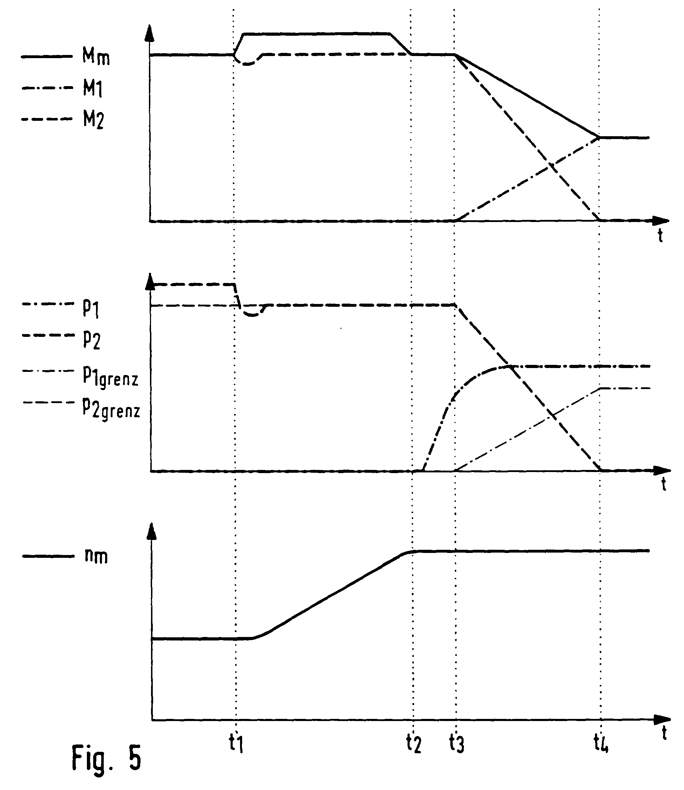

Die Rückschaltung erfolgt im wesentlichen durch Umkehrung des Hochschaltvorgangs, so daß auf eine nochmalige detaillierte Darstellung verzichtet werden kann. Zur Erläuterung dient Fig. 5. Ausgangssituation ist der eingelegte zweite Gang bei geschlossener, schlupffreier Kupplung 17 und gelöster Kupplung 16.

Zum Zeitpunkt $t_1$ wird der Rückschaltvorgang durch Erhöhung des Motormoments um den Betrag $M_n$ eingeleitet. Der Druck $p_2$ in der Kupplung 17 wird zunächst kurzfristig unter einen Wert $p_2$ ($M_2$) abgesenkt, der erforderlich wäre, um das Moment $M_2$ bei schlupfender Kupplung 17 zu übertragen. Da der Übergang von Haft- in Gleitreibung üblicherweise mit einer Hysterese verbunden ist, wird sichergestellt, daß die Kupplung 17 sicher in die Gleitreibung übergeht. Das übertragene Moment $M_2$ bleibt beim Kupplungsdruck $p_2$ ($M_2$) bis auf die kleine kurze Absenkung von $p_2$ zur Überwindung der Hysterese konstant, während die Motordrehzahl $n_m$ ansteigt. Wenn die Synchrondrehzahl des ersten Gangs bzw. der Kupplung 16 erreicht ist, was zum Zeitpunkt $t_2$ der Fall ist, wird die Erhöhung des Motormoments um den Überschluß $\Delta M$ wieder zurückgenommen. Nun wird die Kupplung 16 durch Beaufschlagung mit dem Druck $p_1$ möglichst schnell geschlossen. Da die Kupplung 17 noch das volle Motormoment überträgt und die Motordrehzahl gleich der Synchrondrehzahl im ersten Gang ist, erfolgt dieses Einkuppeln praktisch ruckfrei. Um ein möglichst schnelles schlupffreies Arbeiten der Kupplung 16 zu erzielen, muß der Druck $p_1$ über dem erforderlichen Wert $p_{1\,grenz}$ liegen.

Nun muß die Kupplung 16 langsam die Übertragung des Drehmoments übernehmen. Dies geschieht dadurch, daß in Umkehrung zur Hochschaltung nun das Übertragungsmoment $M_2$ gemäß der folgenden Funktion

$$M_2\,(t) = g\,(t) \cdot (1/u_2) \cdot M_{ab\,soll} \qquad (6)$$

zurückgenommen wird. Die Funktion $g\,(t)$ stellt dabei praktisch eine zeitliche Umkehrung der Funktion $f\,(t)$ gemäß Gleichung (2) dar. Hierdurch nimmt das durch die Kupplung 17 übertragene Moment $M_2$ stetig ab, und das von der Kupplung übertragene Moment $M_1$ stetig zu. Damit das Abtriebsmoment gemäß Gleichung (4) konstant bleibt, muß das Motormoment $M_m$ gemäß Gleichung (5) wieder entsprechend gesteuert werden, das heißt hier jetzt gemäß Fig. 5 reduziert werden. Der Schaltvorgang ist beendet, wenn zum Zeitpunkt $t_4$ das von der Kupplung 17 übertragene Moment $M_2$ auf den Wert 0 abgesunken ist. Die Kupplung 17 ist dann vollständig gelöst, und die Kupplung 16 überträgt vollständig das Motormoment $M_m$.

Es sei noch darauf hingewiesen, daß die lineare Zunahme und die lineare Abnahme des Motormoments $M_m$ in den Fig. 4 und 5 von einer vereinfachten Annahme ausgeht. Dieser Momentenverlauf kann selbstverständlich auch nichtlinear sein, wenn dies zur Erzielung günstiger Schaltzeiten vorteilhaft ist.

**Patentansprüche**

1. Einrichtung zur Steuerung des Abtriebsmoments eines automatischen Schaltgetriebes (10) während des Ablaufs eines Schaltvorgangs in einem motorgetriebenen Fahrzeug auf einen vom Fahrer vorgegebenen, von der Fahrpedalstellung abhängenden Sollwert ($M_{ab\,soll}$), wobei das Schaltgetriebe (10) wenigstens zwei über Kupplungen (16, 17) alternativ einlegbare Getriebegänge (11, 12) aufweist, und wobei zum Hochschalten vorgesehen sind:

   - Mittel (19, 18) zum Erfassen des vom Fahrer vorgegebenen Sollwertes ($M_{ab\,soll}, t_1$) für das Abtriebsmoment zum Anfangszeitpunkt ($t_1$) des Schaltvorgangs,
   - Mittel (23-25) zum zeitgesteuerten kontinuierlichen Schließen der dem höheren Getriebegang (12) zugeordneten zweiten Kupplung (17) bis zum Erreichen eines Übertragungsmomentes ($M_{2\,end}$) dieser mit einem Schlupf behafteten zweiten Kupplung (17), das dem erfaßten Sollwert ($M_{ab\,soll}, t_1$) dividiert durch die Überset-

zung ($u_2$) des höheren Getriebegangs (12) entspricht,

- Mittel (21-29) zum gleichzeitigen entsprechenden zeitgesteuerten kontinuierlichen Öffnen der dem niedrigeren Getriebegang (11) zugeordneten ersten Kupplung (16),

- Mittel (26-28) zur gleichzeitigen entsprechend zeitgesteuerten Erhöhung des Motormomentes ($M_m$) auf einen Wert ($M_{m\ soll}$), der dem erfaßten Sollwert ($M_{ab\ soll},\ t_1$) dividiert durch die Übersetzung ($u_2$) des höheren Getriebegangs (12) entspricht,

- Mittel (29, 30) zum anschließenden vollständigen Lösen der dem niedrigeren Getriebegang (11) zugeordneten ersten Kupplung (16),

- Mittel (34) zum anschließenden zeitweiligen Reduzieren des Motormomentes ($M_m$), bis die Synchrondrehzahl ($n_s$) der zweiten Kupplung (17) erreicht ist, und

- Mittel (35) zur anschließenden Erhöhung des Kupplungsschließdruckes ($p_2$) der zweiten Kupplung (17) derart, daß die Kupplung (17) ohne Schlupf arbeitet.

2. Einrichtung zur Steuerung des Abtriebsmoments eines automatischen Schaltgetriebes (10) während des Ablaufs eines Schaltvorgangs in einem motorgetriebenen Fahrzeug auf einen vom Fahrer vorgegebenen, von der Fahrpedalstellung abhängenden Sollwert ($M_{ab\ soll}$), wobei das Schaltgetriebe (10) wenigstens zwei über Kupplungen (16, 17) alternativ einlegbare Getriebegänge (11, 12) aufweist, und wobei zum Rückschalten vorgesehen sind:

- Mittel (18, 19) zum Erfassen des vom Fahrer vorgegebenen Sollwertes ($M_{ab\ soll},t_1$) für das Abtriebsmoment zum Anfangszeitpunkt ($t_1$) des Schaltvorgangs,

- Mittel zur Reduzierung des Kupplungsschließdrucks ($p_2$) der dem höheren Getriebgang (12) zugeordneten und zum Anfangszeitpunkt ($t_1$) des Schaltvorgangs geschlossenen zweiten Kupplung (17) auf einen Wert, der zur Übertragung des augenblicklichen Übertragungsmoments ($M_2$) im rutschenden Zustand der zweiten Kupplung (17) gerade ausreicht,

- Mittel zum anschließenden zeitweiligen Erhöhen des Motormomentes ($M_m$), bis die Motordrehzahl ($N_m$) der Synchrondrehzahl ($n_s$) der dem niedrigeren Getriebegang (11) zugeordneten ersten Kupplung (16) entspricht,

- Mittel zum anschließenden schlupffreien Schließen der ersten Kupplung (16),

- Mittel zum anschließenden oder gleichzeitigen zeitgesteuerten, kontinuierlichen Öffnen der mit einem Schlupf behafteten zweiten Kupplung (17) bis zur vollständigen Öffnung,

- Mittel zur gleichzeitigen entsprechend gleichgesteuerten Reduzierung des Motormomentes ($M_m$) bis auf einen Wert, der dem erfaßten Sollwert ($M_{ab\ soll},t_1$) für das Abtriebsmoment dividiert durch die Übersetzung ($u_1$) des niedrigeren Getriebegangs (11) entspricht.

3. Einrichtung nach Anspruch 2, dadurch gekennzeichnet, daß die Mittel zur Reduzierung des Kupplungsschließdrucks eine durch kurzzeitige zusätzliche Reduzierung des Schließdrucks den Übergang in die Gleitreibung der zweiten Kupplung (17) bewirkende Steuermittel aufweisen.

4. Einrichtung nach einem der vorhergehenden Ansprüche, dadurch gekennzeichnet, daß aus dem vorgegebenen Sollwert für das Abtriebsmoment ($M_{ab\ soll}$) in Abhängigkeit des jeweiligen Getriebegangs den Sollwert für das Übertragungsmoment und den Kupplungsschließdruck der zugeordneten Kupplung berechnende erste Rechenmittel vorgesehen sind.

5. Einrichtung nach Anspruch 4, dadurch gekennzeichnet, daß die Mittel (23-25) zum zeitgesteuerten kontinuierlichen Öffnen oder Schließen der Kupplung eine Rampensteuerung (24) für den Sollwert des Übertragungsmoments aufweisen.

6. Einrichtung nach Anspruch 4 oder 5, dadurch gekennzeichnet, daß die ersten Rechenmittel eine Rechenstufe (27) aufweisen zur Bestimmung eines theoretischen Istwerts für das Übertragungsmoment ($M_{2\ ist}$) der zugeordneten Kupplung aus dem Sollwert unter Berücksichtigung eines Druckreglermodells für den zugeordneten Druckregler (22).

7. Einrichtung nach einem der vorhergehenden Ansprüche, dadurch gekennzeichnet, daß aus dem Sollwert ($M_{ab\ soll}$) für das Abtriebsmoment und dem augenblicklichen oder sich verändernden Übertragungsmoment ($M_2$) der jeweiligen rutschenden Kupplung das entsprechende Soll-Motormoment ($M_{m\ soll}$) berechnende zweite Rechenmittel (26) vorgesehen sind.

8. Einrichtung nach einem der vorhergehenden Ansprüche. dadurch gekennzeichnet, daß Vergleichsmittel (31) zum Vergleich eines berechneten Endwerts ($M_{2\ end}$) für das Übertragungsmoment der jweiligen rutschenden Kupplung mit dem augenblicklichen Wert dieses Übertragungsmoments vorgesehen sind, wobei bei Gleichheit die andere, beim Hochschaltvorgang beteiligte Kupplung geöffnet und die rutschende Kupplung durch Motorbeeinflussung auf ihre Synchrondrehzahl gebracht wird.

9. Einrichtung nach einem der vorhergehenden Ansprüche, dadurch gekennzeichnet, daß Mittel (30,35) zur Druckerhöhung des Kupplungsdrucks auf einen das Rutschen verhindernden Wert bei Erreichen der jeweiligen Synchrondrehzahl vorgesehen sind.

10. Einrichtung nach einem der vorhergehenden Ansprüche, dadurch gekennzeichnet, daß eine mit dem Sollwert für das Motormoment ($M_{m\,soll}$) beaufschlagbare elektronische Steuervorrichtung (18) zur Einstellung des Ist-Motormoments mit dem Motor (14) verbunden ist.

11. Einrichtung nach einem der vorhergehenden Ansprüche, dadurch gekennzeichnet, daß die Kupplungen (16,17) für die einzelnen Getriebegänge (11,12) mit Druckreglern (21,22) verbunden sind, die vom jeweiligen Sollwert für den Kupplungsschließdruck beaufschlagt sind.

**Claims**

1. Device for adjusting the output torque of an automatic gearbox (10) during a gear-change operation in a motor vehicle to a desired value ($M_{ab\,soll}$) specified by the driver and dependent on the accelerator-pedal position, the gearbox (10) having at least two gears (11, 12), which can be engaged alternatively by way of clutches (16, 17), and the following being provided for upshifts:

   - means (19, 18) for detecting the desired value ($M_{ab\,soll}, t_1$), specified by the driver, for the output torque at the starting instant ($t_1$) of the gear-change operation,
   - means (23-25) for the time-controlled continuous engagement of the second clutch (17) assigned to the higher gear (12) until this second clutch (17), which is subject to slip, reaches a transmitted torque ($M_{2\,end}$) corresponding to the detected desired value ($M_{ab\,soll}, t_1$) divided by the transmission ratio ($u_2$) of the higher gear (12),
   - means (21-29) for the simultaneous, corresponding, time-controlled continuous disengagement of the first clutch (16), which is assigned to the lower gear (11),
   - means (26-28) for the simultaneous, correspondingly time-controlled increasing of the motor torque ($M_m$) to a value ($M_{m\,soll}$) corresponding to the detected desired value ($M_{ab\,soll}, t_1$) divided by the transmission ratio ($u_2$) of the higher gear (12),
   - means (29, 30) for the subsequent complete release of the first clutch (16) assigned to the lower gear (11),
   - means (34) for the subsequent temporary reduction of the motor torque ($M_m$) until the synchronized rotation speed ($n_s$) of the second clutch (17) has been reached and

   - means (35) for subsequently increasing the clutch engagement pressure ($p_2$) of the second clutch (17) in such a way that the clutch (17) operates without slip.

2. Device for adjusting the output torque of an automatic gearbox (10) during a gear-change operation in a motor vehicle to a desired value ($M_{ab\,soll}$) specified by the driver and dependent on the accelerator-pedal position, the gearbox (10) having at least two gears (11, 12), which can be engaged alternatively by way of clutches (16, 17), and the following being provided for upshifts:

   - means (18, 19) for detecting the desired value ($M_{ab\,soll}, t_1$), specified by the driver, for the output torque at the starting instant ($t_1$) of the gear-change operation,
   - means for reducing the clutch engagement pressure ($p_2$) of the second clutch (17), assigned to the higher gear (12) and engaged at the starting instant ($t_1$) of the gear-change operation, to a value which is just sufficient to transmit the instantaneous transmitted torque ($M_2$) in the slipping state of the second clutch (17),
   - means for the subsequent temporary increasing of the motor torque ($M_m$) until the motor speed ($N_m$) corresponds to the synchronized rotation speed ($n_s$) of the first clutch (16), assigned to the lower gear (11),
   - means for the subsequent slip-free engagement of the first clutch (16),
   - means for the subsequent or simultaneous time-controlled continuous disengagement of the second clutch (17), which is subject to slip, until complete disengagement occurs,
   - means for the simultaneous, correspondingly time-controlled reduction of the motor torque ($M_m$) to a value which corresponds to the detected desired value ($M_{ab\,soll}, t_1$) for the output torque divided by the transmission ratio ($u_1$) of the lower gear (11).

3. Device according to Claim 2, characterized in that the means for reducing the clutch engagement pressure have a control means which effects the transition of the second clutch (17) to sliding friction by a brief additional reduction in the engagement pressure.

4. Device according to one of the preceding claims, characterized in that first computing means are provided which, as a function of the respective gear, calculate the desired value for the transmitted torque and the clutch engagement pressure of the associated clutch from the specified desired value for the output torque ($M_{ab\ soll}$).

5. Device according to Claim 4, characterized in that the means (23-25) for the time-controlled continuous disengagement or engagement of the clutch have a ramp control (24) for the desired value of the transmitted torque.

6. Device according to Claim 4 or 5, characterized in that the first computing means have a computing stage (27) for determining a theoretical actual value for the transmitted torque ($M_{2\ ist}$) of the associated clutch from the desired value taking into account a pressure-regulator model for the associated pressure regulator (22).

7. Device according to one of the preceding claims, characterized in that second computing means (26) are provided which calculate from the desired value ($M_{ab\ soll}$) for the output torque and the instantaneous or changing transmitted torque ($M_2$) of the respective slipping clutch the corresponding desired motor torque ($M_{m\ soll}$).

8. Device according to one of the preceding claims, characterized in that comparison means (31) for comparing a calculated final value ($M_{2\ end}$) for the transmitted torque of the respective slipping clutch with the instantaneous value of this transmitted torque are provided and if the two values are the same, the other clutch involved in the upshift operation is disengaged and the slipping clutch is brought to its synchronized rotation speed by influencing the motor.

9. Device according to one of the preceding claims, characterized in that means (30, 35) for increasing the clutch pressure to a value which prevents slip when the respective synchronized rotation speed is reached are provided.

10. Device according to one of the preceding claims, characterized in that an electronic control device (18) which can be supplied with the desired value for the motor torque ($M_{m\ soll}$) and serves to adjust the actual motor torque is connected to the motor (14).

11. Device according to one of the preceding claims, characterized in that the clutches (16, 17) for the individual gears (11, 12) are connected to pressure regulators (21, 22) which are supplied with the respective desired value for the clutch engagement pressure.

## Revendications

1. Installation pour commander le couple de sortie d'une boîte de vitesses automatique (10) pendant que s'effectue un changement de vitesse, dans un véhicule automobile, en fonction d'une valeur de consigne ($M_{ab\ cons}$), dépendant de la position de la pédale d'accélérateur, position donnée par le conducteur, la boîte de vitesses (10) ayant au moins deux rapports de vitesses (11, 12) qui peuvent être passés alternativement par l'intermédiaire de deux embrayages (16, 17), et comprenant des moyens pour passer les rapports, à savoir :

   - des moyens (19, 18) pour détecter la valeur de consigne ($M_{ab\ cons}$, $t_1$) prédéterminée par le conducteur pour le couple de sortie à l'instant initial ($t_1$) de l'opération de passage de vitesse,
   - des moyens (23-25) pour fermer de manière continue commandée dans le temps, le second embrayage (17) associé au rapport de vitesse (12) supérieur, jusqu'à atteindre un couple de transmission ($M_{2\ fin}$) de ce second embrayage (17) entaché de patinage, et qui correspond à la valeur de consigne détectée ($M_{ab\ cons}$, $t_1$) divisée par le rapport ($u_2$) de la vitesse supérieure (12),
   - des moyens (21-29) pour ouvrir simultanément en continu, de façon commandée dans le temps, le premier embrayage (16) associé à la vitesse inférieure (11),
   - des moyens (26-28) pour augmenter simultanément, de façon commandée dans le temps, le couple moteur ($M_m$) jusqu'à une valeur ($M_{m\ cons}$) qui correspond à la valeur de consigne détectée ($M_{ab\ cons}$, $t_1$) divisée par le rapport ($u_2$) de la vitesse supérieure (12),
   - des moyens (29, 30) pour débrayer consécutivement, de façon totale, le premier embrayage (16) associé à la vitesse inférieure (11),
   - des moyens (34) pour réduire provisoirement de façon consécutive le couple moteur ($M_m$) jusqu'à atteindre la vitesse de rotation synchrone ($n_s$) du second embrayage (17) et
   - des moyens (35) pour augmenter de manière consécutive la pression d'embrayage ($p_2$) du second embrayage (17) pour que l'embrayage (17) fonctionne sans patinage.

2. Installation pour la commande du couple de sortie d'une boîte de vitesses automatique (10) pendant que s'exécute un passage de vitesse dans un véhicule à moteur en fonction d'une valeur de consigne ($M_{ab\ cons}$) dépendant de la position de la pédale d'accélérateur prédéterminée par le conducteur, la boîte de vitesses (10) ayant au moins deux vitesses (11, 12) qui peuvent se passer alternativement par l'intermédiaire de deux embrayages (16, 17), et des moyens sont prévus pour le passage de la vitesse inférieure :

- des moyens (18, 19) pour détecter la valeur de consigne ($M_{ab\ cons}$, $t_1$) prédéterminée par le conducteur pour le couple de sortie au point initial ($t_1$) de l'opération de passage de vitesse,
- des moyens pour réduire la pression d'embrayage ($p_2$) du second embrayage (17) associé à la vitesse supérieure (12) et qui est embrayé à l'instant initial ($t_1$) de l'opération de commutation, jusqu'à une valeur suffisante pour transmettre le couple de transmission ($M_2$) instantané pendant que le second embrayage (17) patine,
- des moyens pour augmenter consécutivement et de façon provisoire le couple moteur ($M_m$) jusqu'à ce que la vitesse de rotation du moteur ($N_m$) corresponde à la vitesse de rotation de synchronisation ($n_s$) du premier embrayage (16) associé à la vitesse inférieure (11),
- des moyens pour fermer consécutivement, sans glissement, le premier embrayage (16),
- des moyens pour ouvrir en continu, de façon consécutive ou de manière commandée dans le temps, simultanément, le second embrayage (17) travaillant avec patinage jusqu'au débrayage total,
- des moyens pour réduire simultanément ou de manière commandée dans le temps, le couple moteur ($M_m$) jusqu'à une valeur correspondant à la valeur de consigne détectée ($M_{ab\ cons}$, $t_1$) du couple de sortie divisé par le rapport ($u_1$) de la vitesse inférieure (11).

3. Installation selon la revendication 2, caractérisée en ce que les moyens pour réduire la pression d'embrayage comprennent des moyens de commande qui assurent par une réduction supplémentaire de courte durée de la pression d'embrayage, le passage en patinage du second embrayage (17).

4. Installation selon l'une des revendications précédentes, caractérisée en ce qu'à partir de la valeur de consigne prédéterminée du couple de sortie ($M_{ab\ cons}$), en fonction de la vitesse respective, il y a des premiers moyens de calcul qui calculent la valeur de consigne du couple de transmission et la pression d'embrayage de l'embrayage associé.

5. Installation selon la revendication 4, caractérisée en ce que les moyens (23-25) pour l'ouverture en continu commandée dans le temps ou la fermeture de l'embrayage présentent une commande en forme de rampe (24) pour la valeur de consigne du couple de transmission.

6. Installation selon la revendication 4 ou 5, caractérisée en ce que les premiers moyens de calcul comportent un premier étage de calcul (27) pour déterminer une valeur réelle théorique pour le couple de transmission ($M_{2\ reel}$) de l'embrayage associé à partir de la valeur de consigne en tenant compte d'un modèle de régulateur de pression pour le régulateur de pression associé (22).

7. Installation selon l'une des revendications précédentes, caractérisée en ce qu'à partir de la valeur de consigne ($M_{ab\ cons}$) du couple de sortie et du couple de transmission instantané ou variable ($M_2$) de l'embrayage en patinage, respectif, elle comporte des seconds moyens de calcul (26) pour calculer le couple moteur de consigne ($M_{m\ cons}$) correspondant.

8. Installation selon l'une des revendications précédentes, caractérisée par des moyens de comparaison (31) pour comparer une valeur finale calculée ($M_{2\ fin}$) du couple de transmission de l'embrayage en patinage respectif avec la valeur instantanée de ce couple de transmission, et en cas d'égalité, l'autre embrayage, qui participe au passage de la vitesse supérieure, s'ouvre et l'embrayage en patinage est mis à la vitesse de rotation synchrone par action du moteur.

9. Installation selon l'une des revendications précédentes, caractérisée par des moyens (30, 35) pour augmenter la pression d'embrayage à une valeur réduisant le patinage lorsqu'on atteint la vitesse de rotation synchrone respective.

10. Installation selon l'une des revendications précédentes, caractérisée par un dispositif de commande électronique (18) recevant la valeur de consigne du couple moteur ($M_{m\ cons}$) pour régler le couple moteur réel, ce dispositif de commande étant relié au moteur (14).

11. Installation selon l'une des revendications précédentes, caractérisée en ce que les embrayages (16, 17) des différentes vitesses (11, 12) sont reliés à des régulateurs de pression (21, 22) sollicités par la valeur de consigne respective de la pression de fermeture d'embrayage.

Fig. 1

EP 0 580 827 B1

Fig. 2

Fig. 3

**Fig. 4**

Fig. 5